# EUROPÄISCHE PATENTANMELDUNG

(11) **EP 0 835 020 A2**
(43) Veröffentlichungstag der Anmeldung: **08.04.1998**
(21) Anmeldenummer: 97113411.9
(22) Anmeldetag: 04.08.1997
(51) Int. Cl.: H04M 19/08, H04M 3/22

(54) **Analoges Fernsprechteilnehmerendgerät mit Einrichtungen zur Realisierung von Zusatzfunktionen**

(30) Priorität: 29.08.1996 DE 19635021
(71) Anmelder: SIEMENS AKTIENGESELLSCHAFT, 80333 München (DE)
(72) Erfinder: Kunisch, Paul, 82178 Puchheim (DE)

(57) **Zusammenfassung**

Im on-hook-Zustand des Teilnehmerendgeräts und außerhalb des Betriebszustands 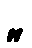 Ruhe" der Teilnehmeranschlußschaltung wird für die Dauer des Empfangs von mit Zusatzfunktionen in Zusammenhang stehenden Daten ein aus der Teilnehmerleitung (TLtg) Strom ziehendes im Endgerät integriertes Stromversorgungsgerät (SV) wirksam geschaltet, das den Versorgungsstrom für die Einrichtungen zur Realisierung der Zusatzfunktion (A, M, D) liefert, der jedoch soweit begrenzt ist, daß der dann fließende erhöhte Teilnehmerleitungsschleifenstrom nicht als Schleifenschluß indiziert wird.

## Beschreibung

Die Erfindung betrifft ein analoges Fernsprechteilnehmerendgerät, das über die Teilnehmeranschlußleitung von der Vermittlungsstelle her ferngespeist wird und das Einrichtungen zur Auswertung, Speicherung und Anzeige von außerhalb des Vermittlungszustandes 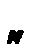 Ruhe" im on-hook-Zustand von der Vermittlungsstelle her empfangenen mit Zusatzfunktionen in Zusammenhang stehenden Daten aufweist.

Ein solches Fernsprechteilnehmerendgerät hat im on-hook-Zustand hochohmig zu sein, da im Vermittlungszustand 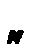 Ruhe" in der zugehörigen Teilnehmeranschlußschaltung aus Stromersparnisgründen der Speisestrom hochohmig zugeführt wird und bei der Indikationsschaltung zur Auswertung einer Teilnehmerleitungssignalisierung in diesem Zustand eine niedrige Anreizschwelle wirksam geschaltet ist. Dabei ist auch zu berücksichtigen, daß mehrere Fernsprechteilnehmerendgeräte parallel angeschlossen sein dürfen.

Bisher kam aus diesem Grunde zur Speisung von Einrichtungen, die im Zusammenhang mit Zusatzfunktionen stehen, die im on-hook-Zustand des Fernsprechteilnehmerendgeräts und außerhalb des Betriebszustands 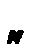 Ruhe" abgewickelt werden, eine zusätzliche lokale Stromversorgung zum Einsatz, die aus dem Stromnetz gespeist wird. Als eine solche Zusatzfunktion ist z. B. die Displayanzeige des Namens und der Rufnummer des anrufenden Teilnehmers (CLIP; Calling Line Identification Presentation) zu nennen.

Die Aufgabe der Erfindung besteht darin, ein analoges Fernsprechteilnehmerendgerät anzugeben, bei dem auf eine solche vom Stromleitungsnetz abgeleitete lokale Stromversorgung für Einrichtungen zur Realisierung von Zusatzfunktionen verzichtet werden kann.

Diese Aufgabe wird mit dem eingangs erwähnten analogen Fernsprechteilnehmerendgerät gelöst, das die weiteren Merkmale des Patentanspruchs 1 aufweist.

Die erfindungsgemäße Lösung läuft darauf hinaus, daß die Einrichtungen, die mit der Realisierung von Zusatzfunktionen in Zusammenhang stehen, genauso wie das Fernsprechteilnehmerendgerät im Zusammenhang mit der Funktion 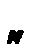 Fernsprechen" über die Teilnehmeranschlußleitung von der Vermittlungsstelle her ferngespeist werden, wozu eine über die Teilnehmeranschlußleitung Strom aufnehmende Stromversorgungseinrichtung als Bestandteil des Fernsprechendgerätes vorgesehen ist. Diese Stromversorgungseinrichtung wird jedoch lediglich für die Dauer der Übertragung der solche Zusatzinformationen betreffenden Daten aktiviert, was wiederum nur außerhalb des Vermittlungszustands 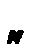 Ruhe" der Fall ist und damit während einer Zeit, in der die Anreizschwelle bei der vermittlungsstellenseitigen Indikationsschaltung für die Teilnehmerleitungssignalisierung gegenüber dem Betriebszustand 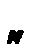 Ruhe" hoch liegt. In diesem Stadium ist es daher auch möglich, einerseits einen ausreichenden Versorgungsstrom für die erwähnten Einrichtungen zur Verfügung zu stellen, andererseits den Strom aber soweit zu begrenzen, daß sein Einsetzen nicht fälschlicherweise als Teilnehmerleitungsschleifenschluß interpretiert wird.

Weitere Ausgestaltungen der Erfindung sind in Unteransprüchen angegeben.

Gemäß Anspruch 2 ist die Stromversorgungseinrichtung durch einen hochohmig aufladbaren Energiespeicher ergänzt, der den zu Beginn einer Datenübertragung erforderlichen Versorgungsstrom für eine Datenübertragungserkennungsschaltung liefert. Die Stromversorgungseinrichtung ist dabei in Form einer aus einer von dieser Erkennungsschaltung aktivierbaren und deaktivierbaren Stromreglerschaltung realisiert, die anschließend die Stromversorgung für die im Zusammenhang mit den übertragenen Daten wirksamen Einrichtungen einschließlich der Erkennungsschaltung übernimmt. Bei dieser Ausführungsform ist gewährleistet, daß schon zu Beginn einer Datenübertragung ein Versorgungsstrom für eine Datenübertragungserkennungsschaltung zur Verfügung steht, ohne daß in der Zeit vor der Datenübertragung die Forderung nach der Hochohmigkeit des Fernsprechteilnehmerendgerätes verletzt wird und daß im Verlaufe der Datenübertragung ein ausreichender Versorgungsstrom für die eigentlichen Auswerteeinrichtungen zur Verfügung steht, der dabei sich einstellende Zustand einer relativen Niedrigohmigkeit des Fernsprechteilnehmerendgerätes aber nicht länger als die Datenübertragung andauert.

Gemäß Anspruch 3 sind vorzugsweise zusätzlich eine Filter- und eine Gleichrichterschaltung vorgesehen, die bei Rufbeginn aus dem Rufwechselstrom niederohmig den Ladestrom für den Energiespeicher liefern. Diese Ausführungsform hat Bedeutung für die Realisierung von Zusatzfunktionen, die erst nach Eintreffen des ersten Rufs abzuwickeln sind und stellt sozusagen eine Schnelladevorrichtung für den Energiespeicher dar. Es kann daher bei rasch aufeinanderfolgenden Belegungen des Fernsprechteilnehmerendgerätes wegen der für die Aufladung des Energiespeichers erforderliche Ladezeit nicht zu störenden Verzögerungen bei der Aktivierung der Stromversorgungseinrichtung kommen.

Nachstehend wird die Erfindung anhand eines Ausführungsbeispiels unter Bezugnahme auf eine Figur näher erläutert.

Die Erfindung zeigt die im Zusammenhang mit der Erläuterung der Erfindung relevanten Bestandteile eines zur Abwicklung von Zusatzfunktionen ausgestatteten Fernsprechteilnehmerendgeräts.

An die Adern a und b der Teilnehmeranschlußleitung TLtg dieses Fernsprechteilnehmerendgeräts sind über Koppelkondensatoren C3 und C4 eine Erkennungsschaltung E sowie eine Auswerteschaltung A angeschlossen.

Die Erkennungsschaltung spricht auf das Auftreten von im Zusammenhang mit Zusatzfunktionen der vorgenannten Art im on-hook-Zustand und außerhalb des Vermittlungszustands 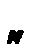 Ruhe" von der Vermittlungsstelle her an das Fernsprechteilnehmerendgerät übertragene Daten an. Sie macht dabei die Auswerteschaltung für solche Daten betriebsbereit, die eine Decodierung derselben vornimmt. Die Auswerteschaltung beliefert ihrerseits im dargestellten Fall einen Speicher M sowie ein Display D mit aus den empfangenen Daten abgeleiteten Eingangssignalen.

Sämtliche der erläuterten Einrichtungen benötigen für ihren Betrieb eine Speisespannung V_{DD}, deren Bereitstellung das eigentliche Anliegen der Erfindung ist.

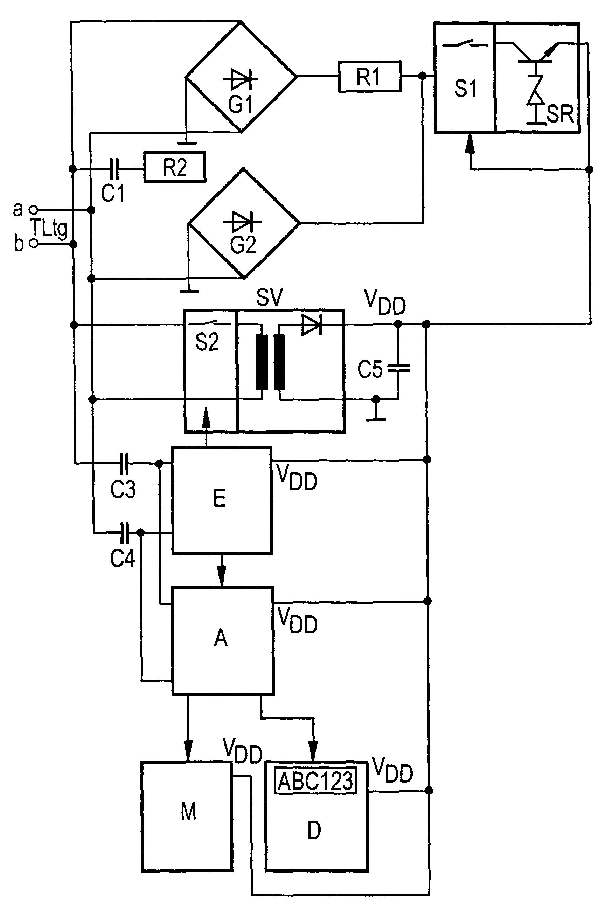

Die Figur zeigt ferner einen ebenfalls an den Adern a und b der Teilnehmeranschlußleitung TLtg liegenden Gleichrichter G1, der über einen hochohmigen Widerstand R1 und einen über einen Schalter S1 zugänglichen Spannungsregler SR den Ladestrom für einen Energiespeicher in Form eines Ladekondensators C5 liefert. Durch den Schalter S1 wird der Spannungsregler jeweils dann wenn der Ladekondensator auf die maximale Betriebsspannung aufgeladen ist, außer Betrieb genommen bzw. wieder wirksam geschaltet, wenn eine Entladung auf einen Minimalwert stattgefunden hat

Normalerweise wird im Betriebszustand 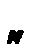 Ruhe" der Ladekondensator C5 weit genug aufgeladen sein, um bei einer außerhalb des Betriebszustands 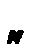 Ruhe" beginnenden Datenübertragung an das Fernsprechteilnehmerendgerät, die mit einer Zusatzfunktion im Zusammenhang steht, für die Erkennungsschaltung E einen ausreichenden Speisestrom zur Verfügung zu stellen.

Sobald die Erkennungsschaltung den Beginn einer solchen Datenübertragung erkannt hat, wird sie ein Betätigungssignal an einen Schalter S2 einer Stromversorgungseinrichtung SV liefern, die ebenfalls an die Teilnehmeranschlußleitung TLtg angeschlossen ist. Die Stromversorgungseinrichtung wird dadurch aktiviert. Sie ist beim vorliegenden Ausführungsbeispiel in Form eines Schaltreglers mit Strombegrenzung realisiert und wird von nun an aus der Teilnehmeranschlußleitung einen auch für die übrigen erwähnten Einrichtungen A, M und D ausreichenden Speisestrom ziehen. Die durch den Schaltregler bewirkte Strombegrenzung ist dabei derart bemessen, daß eine Indikationsschaltung in der in der Vermittlungsstelle befindlichen Teilnehmeranschlußschaltung für das Fernsprechteilnehmerendgerät, die der Indikation der Teilnehmerleitungssignalisierung, also dem Erkennen von Schleifenstromänderungen durch Schleifenschluß und Schleifenunterbrechung dient, nicht fälschlicherweise anspricht. Die Ansprechschwelle einer solchen Indikationsschaltung ist in den außerhalb des Betriebszustandes 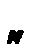 Ruhe" liegenden Betriebszuständen und insbesondere im Betriebszustand 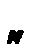 Gespräch", in dem die betrachtete Datenübertragung stattfindet, wesentlich höher als im Betriebszustand 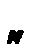 Ruhe", so daß die erforderliche Strombegrenzung dem Fließen eines ausreichend hohen Speisestroms für die Einrichtungen A, M und D nicht entgegensteht.

Nach dem Ende der Datenübertragung, das die Erkennungseinrichtung E erkennt, wird durch ein von dieser abgegebenes Betätigungssignal für den Schalter S2 die Stromversorgungseinrichtung SV des Fernsprechteilnehmerendgerätes wieder deaktiviert, so daß das Fernsprechteilnehmerendgerät wieder seinen hochohmigen Zustand einnimmt.

Die Figur zeigt außer den beschriebenen Bestandteilen einen über eine Filterschaltung in Form eines aus einem Widerstand R2 und einem Kondensator C1 bestehenden RC-Gliedes an den Adern der Teilnehmeranschlußleitung TLtg liegenden Gleichrichter G2. Dessen Ausgangssignal wird über den Schalter S1 und den Spannungsregler SR niederohmig an den Speicherkondensator C5 geliefert. Durch diese Bestandteile wird bei Fließen eines Rufwechselstroms ein Ladestrom für den Speicherkondensator C5 bereitgestellt. Diese Schaltungsvariante, die vorzugsweise in Ergänzung zu den Schaltelementen vorhanden ist, die eine hochohmige Aufladung des Speicherkondensators C5 bewirken, ist für den Fall solcher Zusatzfunktionen von Bedeutung, deren Abwicklung erst nach Eintreffen des ersten Rufs zu erfolgen hat. Hierzu gehört die vorerwähnte Anzeige von Name und Rufnummer eines Anrufers, die ja erst von Interesse ist, wenn durch ein Rufzeichen auf sie aufmerksam gemacht worden ist. Die mit Hilfe des Rufwechselstroms bewirkte Schnelladung des Speicherkondensators C5 stellt einen ordnungsgemäßen Betrieb bei einem in kurzem Abstand zu einem Gesprächsende erfolgenden erneuten Anruf sicher, bei dem der Speicherkondensator C5 über den hochohmigen Widerstand R1 noch nicht ausreichend weit aufgeladen wäre, um ausreichenden Speisestrom für die Erkennungseinrichtung E liefern zu können.

## Patentansprüche

1. Analoges Fernsprechteilnehmerendgerät, das über die Teilnehmeranschlußleitung (TLtg) von der Vermittlungsstelle her ferngespeist wird und das Einrichtungen zur Auswertung (A), Speicherung (M) und Anzeige (D) von außerhalb des Vermittlungszustandes 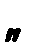 Ruhe" im on-hook-Zustand von der Vermittlungsstelle her empfangenen mit Zusatzfunktionen in Zusammenhang stehenden Daten aufweist und das ferner mit einer integrierten, über die Teilnehmeranschlußleitung (Tltg) Strom aufnehmenden Stromversorgungseinrichtung (SV) zur Lieferung des Versorgungsstroms für die genannten Einrichtungen (A, M, D) versehen ist, die jeweils nur für die Dauer einer solchen Datenübertragung aktiviert wird und dabei den der Teilnehmeranschlußleitung entnommenen Strom auf einen Wert begrenzt, der unter der außerhalb des Vermittlungszustands 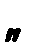 Ruhe" wirkenden Anreizschwelle für die Indizierung der Teilnehmerleitungssignalisierung liegt.

2. Analoges Fernsprechteilnehmerendgerät nach Anspruch 1, **dadurch gekennzeichnet,** daß die Stromversorgungseinrichtung (SV) durch einen hochohmig aufladbaren Energiespeicher (C5) ergänzt ist, der den zu Beginn einer Datenübertragung erforderlichen Versorgungsstrom für eine Datenübertragungserkennungsschaltung (E) liefert, und daß die Stromversorgungseinrichtung (SV) in Form einer aus einer von dieser Erkennungsschaltung (E) aktivierbaren und deaktivierbaren Stromreglerschaltung realisiert ist, die anschließend die Stromversorgung für die im Zusammenhang mit den übertragenen Daten wirksamen Einrichtungen (A, M, D) einschließlich der Erkennungsschaltung (E) übernimmt.

3. Analoges Fernsprechteilnehmerendgerät nach Anspruch 2, **dadurch gekennzeichnet,** daß eine Filter- (R2, C1) und eine Gleichrichterschaltung (G2) vorgesehen sind, die bei Rufbeginn aus dem Rufwechselstrom niederohmig den Ladestrom für den Energiespeicher (C5) liefern.
